(19) Europäisches Patentamt / European Patent Office / Office européen des brevets

(11) **EP 2 741 893 B1**

(12) **FASCICULE DE BREVET EUROPEEN**

(45) Date de publication et mention de la délivrance du brevet:
**01.02.2017 Bulletin 2017/05**

(21) Numéro de dépôt: **12758556.0**

(22) Date de dépôt: **08.08.2012**

(51) Int Cl.:
**B25J 9/16** $^{(2006.01)}$

(86) Numéro de dépôt international:
**PCT/FR2012/051871**

(87) Numéro de publication internationale:
**WO 2013/024227 (21.02.2013 Gazette 2013/08)**

(54) **PROCÉDÉ DE COMMANDE D'UN AUTOMATE À ACTIONNEMENT PARALLÈLE REDONDANT, DISPOSITIF DE COMMANDE ASSOCIÉ ET AUTOMATE**

VERFAHREN ZUR STEUERUNG EINER MASCHINE MIT REDUNDANTER PARALLELER BETÄTIGUNG, ENTSPRECHENDE STEUERUNGSVORRICHTUNG UND MASCHINE

METHOD OF CONTROLLING A MACHINE WITH REDUNDANT PARALLEL ACTUATION, ASSOCIATED CONTROL DEVICE AND MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.08.2011 FR 1102509**

(43) Date de publication de la demande:
**18.06.2014 Bulletin 2014/25**

(73) Titulaires:
 • **Tecnalia France**
   **34090 Montpellier (FR)**
 • **Centre National de la Recherche Scientifique (C.N.R.S.)**
   **75794 Paris Cedex 16 (FR)**

(72) Inventeurs:
 • **PIERROT, François**
   **F-34430 Saint Jean de Vedas (FR)**
 • **CHEMORI, Ahmed**
   **F-34070 Montpellier (FR)**
 • **MICHELIN, Micaël**
   **F-34090 Montpellier (FR)**

(74) Mandataire: **Cabinet BARRE LAFORGUE & associés**
   **35, rue Lancefoc**
   **31000 Toulouse (FR)**

(56) Documents cités:
 • **DAVID CORBEL ET AL: "Towards 100G with PKM. Is actuation redundancy a good solution for pick-and-place?", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 mai 2010 (2010-05-03), pages 4675-4682, XP031709026, ISBN: 978-1-4244-5038-1 cité dans la demande**

EP 2 741 893 B1

**Description**

L'invention concerne un procédé et un dispositif de commande d'un automate à actionnement parallèle redondant, et un automate commandé par un tel dispositif et/ou selon un tel procédé. L'invention s'étend à un automate -notamment un robot de manipulation- à actionnement parallèle redondant pour des applications à hautes vitesses et hautes accélérations.

Pour des tâches robotisées effectuées à très hautes fréquences, il est connu d'utiliser des automates - en particulier des robots de manipulation - dits « parallèles » c'est-à-dire présentant un bâti et un mobile entraînés simultanément par plusieurs transmissions mécaniques motrices parallèles. Cette multiplication des transmissions mécaniques motrices permet d'obtenir une puissance motrice plus importante par rapport à l'inertie du mobile (outils, objets à déplacer, etc.). Des vitesses de déplacement et des accélérations élevées peuvent donc être atteintes par de tels dispositifs dont l'actionnement est dit « redondant » dès lors qu'ils comportent plus de transmissions mécaniques motrices que le mobile ne présente de degrés de liberté dans l'espace. Par exemple, le manipulateur parallèle « R4 » décrit par Corbel et al. dans « Towards 100g with PKM. Is actuation redundancy a good solution for pick and place? » in Proceedings of the IEEE International Conference on Robotics and Automation, pp. 4675-4682, 2010, comporte un mobile actionné par quatre actionneurs via quatre transmissions mécaniques. Le mobile comporte un outil préhenseur et est mobile dans l'espace selon trois degrés de liberté.

Ainsi, on connait des procédés de commande d'automates à actionnement parallèle redondant, dans lesquels une trajectoire de consigne du mobile est convertie en des trajectoires de consignes des actionneurs des transmissions mécaniques motrices. Ces trajectoires de consignes des actionneurs sont comparées à une mesure de la position de l'actionneur, avant d'être traitées par un module de traitement électronique, par exemple de type proportionnel-dérivé (PD) ou proportionnel-intégral-dérivé (PID). Ce module de traitement produit donc une commande des actionneurs.

Dans certains de ces procédés connus un terme de régulation par action anticipative (parfois dit « feed-forward » par anglicisme) de chaque actionneur est additionné à la commande des actionneurs.

Cependant, de nombreux inconvénients subsistent dans ces procédés connus qui limitent les performances des automates à actionnement parallèle redondant.

En effet, dans un automate à actionnement parallèle redondant, au moins un degré de liberté du mobile dépend des positions d'au moins deux actionneurs. Or la régulation et la commande des actionneurs sont faites à partir de mesures de position des actionneurs eux-mêmes et non du mobile. De sorte que des erreurs géométriques inévitables (échauffement thermique, tolérance de fabrication, élasticité, etc.) peuvent conduire deux actionneurs à avoir des comportements contradictoires pour rejoindre chacun leur position de consigne (correspondant à une position de consigne du mobile) et donc mener au développement de contraintes mécaniques internes importantes.

Ces contraintes mécaniques internes sont d'autant plus grandes que le module de traitement (ou régulateur) comporte un terme intégral qui cumule dans le temps les erreurs entre consigne et mesure des positions des actionneurs et donc augmente les efforts mécaniques exercés par deux actionneurs exerçant des efforts antagonistes. En pratique, les capacités maximales d'accélération d'un tel automate connu doivent être bridées afin d'éviter toute rupture mécanique.

En outre, d'autres inconvénients subsistent tels que des positionnements imprécis du mobile. En effet, les actionneurs n'atteignant que rarement leur position de consigne, ils restent actifs et peuvent provoquer des petits mouvements (de l'ordre de grandeur des défauts géométriques) du mobile alors même qu'une position de consigne statique du mobile est demandée par le programme de contrôle de l'automate.

En outre, le traitement de plusieurs signaux d'erreur de position des actionneurs en parallèle nécessite des ressources et des temps de calcul importants dans le cas de traitements complexes. En effet, le temps de réalisation de chaque boucle de contrôle-commande est d'autant plus long que le traitement de signaux d'erreur est lui-même long.

L'invention vise donc à pallier ces inconvénients.

L'invention vise en particulier à proposer un procédé de commande d'un automate à actionnement parallèle redondant qui soit performant en rapidité d'exécution, et notamment qui permet d'atteindre des accélérations élevées.

L'invention vise aussi à proposer un tel procédé permettant de procurer une grande précision de positionnement du mobile.

L'invention vise également à proposer un tel procédé de commande d'un automate à actionnement parallèle redondant simple et à temps de calcul court et pouvant être mis en oeuvre avec des ressources informatiques conventionnelles.

L'invention vise notamment à proposer un tel procédé compatible avec les inévitables erreurs géométriques d'un tel automate.

L'invention vise en outre à proposer un tel procédé dont l'implémentation est peu coûteuse, notamment ne nécessitant que des modifications logicielles ou électroniques d'un dispositif de commande.

Dans tout le texte, on désigne par « mobile » toute combinaison d'un outil, et/ou d'un objet à déplacer, et/ou d'une platine, etc. située au bout d'une chaîne mécanique et cinématique de l'automate, et dont les déplacements sont l'objet de l'utilisation de l'automate.

L'invention concerne donc un procédé de commande d'un automate comprenant :

- un bâti,
- un mobile entraîné par rapport au bâti par une pluralité de transmissions mécaniques en nombre strictement supérieur au nombre de degrés de liberté du mobile, lesdites transmissions mécaniques étant parallèles entre elles et chacune actionnée par au moins un actionneur comprenant :

  • un corps fixé au bâti,
  • un organe d'actionnement d'une transmission mécanique,
  • un capteur de position adapté pour produire un signal, dit signal de position mesurée, représentatif d'une position de l'organe d'actionnement, procédé dans lequel, pour chacun des actionneurs, un signal, dit signal d'erreur actionneur, est produit par comparaison entre le signal de position mesurée dudit actionneur et un signal de consigne de position dudit actionneur,
  caractérisé en ce que :

  - les signaux d'erreur actionneur sont convertis en un signal, dit signal d'erreur mobile, d'erreur de position du mobile par application de données représentatives de la cinématique des transmissions mécaniques,
  - le signal d'erreur mobile est traité par un module de traitement apte à produire un signal d'effort à appliquer au mobile,
  - ledit signal d'effort est converti en signaux de commande des actionneurs par application de données représentatives de la cinématique des transmissions mécaniques.

Des actionneurs selon l'invention peuvent être choisis parmi tout type d'actionneur, par exemple des moteurs tournants, des vérins, etc. Le corps de chaque actionneur est avantageusement fixé immobile sur le bâti de l'automate, de sorte que l'organe d'actionnement mobile de chaque actionneur est mobile par rapport au bâti.

L'organe d'actionnement mobile d'un actionneur est la partie mobile permettant de communiquer une puissance mécanique : par exemple le rotor d'un moteur tournant, la tige mobile d'un vérin, etc.

Les transmissions mécaniques sont reliées chacune à au moins un organe d'actionnement d'un actionneur et sont donc entraînées par les actionneurs. Chaque transmission mécanique est d'autre part reliée au mobile, de sorte à lui transmettre un déplacement (ou un effort). Le nombre de transmissions mécaniques motrices reliées au mobile étant supérieur au nombre de degrés de liberté du mobile, il s'agit d'un automate à actionnement parallèle redondant, c'est-à-dire d'un automate dont les transmissions mécaniques sont en parallèle. L'automate a donc une cinématique parallèle, et un actionnement redondant, notamment un actionnement de chacune des transmissions en parallèle. L'automate est en particulier différent d'un automate à actionnement sériel redondant dont les transmissions sont en série les unes à la suite des autres, chacune actionnée donc à actionnement redondant, mais dans lequel le mobile est directement relié mécaniquement à un nombre de transmissions inférieur à son nombre de degré de liberté.

Les signaux (de consigne, de position, de commande, ...) sont avantageusement des signaux électroniques, notamment des signaux numériques. De sorte que le module de traitement est avantageusement un circuit électronique, ou une fonction logicielle équivalente à un circuit électronique.

Chaque signal d'erreur actionneur est produit par comparaison - notamment par soustraction - du signal de consigne de position de l'organe d'actionnement au signal de position mesurée dudit organe d'actionnement. Un signal d'erreur actionneur est propre à un actionneur en particulier, de sorte qu'à chacun des actionneurs est associé un signal d'erreur actionneur qui lui est particulier.

L'invention consiste à traiter (par un module de traitement) le signal d'erreur mobile et non pas une pluralité de signaux d'erreur actionneurs (relatifs aux positions des organes d'actionnement). Le signal d'erreur mobile est obtenu en transformant l'ensemble des signaux d'erreur actionneurs par un modèle cinématique des transmissions mécaniques.

Bien que le signal d'erreur mobile soit homogène à une erreur de position du mobile, il ne correspond pas à l'erreur réelle de position du mobile entre une position de consigne du mobile et la position réelle du mobile. En effet, du fait des défauts géométriques des transmissions mécaniques, l'erreur réelle de positionnement du mobile n'est pas nulle lorsque le signal d'erreur mobile représente une valeur nulle.

Cependant, les inventeurs ont déterminé que cette méthode permet d'éliminer tout conflit d'actionnement entre une pluralité d'actionneurs.

L'invention permet de plus d'améliorer le temps de traitement d'un procédé selon l'invention, notamment lorsque le traitement effectué par le module de traitement est complexe. En effet, le module de traitement ne traite que le signal d'erreur mobile et non plus une pluralité de signaux d'erreur actionneurs.

L'invention permet aussi et surtout d'envoyer des signaux de commande aux actionneurs qui ne sont pas contradictoires car ils sont tous calculés à partir d'un même signal d'erreur mobile, et donc d'un même signal d'effort (obtenu par le traitement du signal d'erreur mobile par le module de traitement), homogène à une force à appliquer au mobile.

Ainsi, dans un procédé selon l'invention, les erreurs de position des actionneurs ne sont pas individuellement corrigées, mais la somme des erreurs de position des actionneurs (pondérées par un modèle cinématique des transmissions mécaniques avec le mobile) est corrigée. De sorte que les inventeurs ont réussi à éliminer toute commande antagoniste des actionneurs, et ce malgré d'éventuels défauts géométriques de l'automate.

Ainsi, l'invention permet d'obtenir, pour la première fois, un automate à actionnement parallèle utilisable au maximum de ses capacités mécaniques d'entraînement, et donc à des vitesses et des accélérations très élevées.

En outre, de façon inattendue, les mesures effectuées par les capteurs de position (des organes d'actionnement) des actionneurs lorsque l'automate atteint une position arrêtée pour une position de consigne donnée, permettent de déterminer les défauts géométriques de l'automate à cet instant donné.

Dans un procédé de commande selon l'invention, les défauts géométriques de l'automate (notamment dus aux transmissions mécaniques) sont reportés sur le mobile dont la position finale est légèrement différente de la position de consigne imposée.

Cependant cette erreur de positionnement du mobile n'a pas d'impact significatif puisqu'aucune mesure n'est réalisée sur la position du mobile, et qu'il s'agit en général de défauts géométriques minimes. Ces erreurs géométriques sur le positionnement du mobile sont d'autant plus faibles que les erreurs géométriques de l'automate sont généralement non-cumulatives. En outre, des défauts géométriques constants dans le temps tels que des tolérances de fabrication, ou variables sur le long-terme tels que des usures de pièces, induisent une erreur statique de positionnement du mobile, de sorte que les positions relatives successives du mobile sont fiables.

En outre, les actionneurs sont réellement à l'arrêt dès lors qu'une position de consigne est atteinte (aux défauts géométriques près), de sorte que le mobile est parfaitement immobile.

Avantageusement et selon l'invention, le signal de consigne de position de l'organe d'actionnement de chaque actionneur est obtenu par application de données représentatives de la géométrie des transmissions mécaniques à un signal représentatif d'une position de consigne du mobile.

Un signal de consigne de position du mobile est généralement une donnée fournie par un programme de commande d'un automate en fonction des déplacements qu'un opérateur souhaite donner au mobile de l'automate. Dans un procédé selon l'invention, un modèle géométrique des transmissions mécaniques reliant les actionneurs au mobile permet de convertir ce signal de consigne de position du mobile en signaux de consignes de position des actionneurs.

Avantageusement et selon l'invention, le module de traitement comprend un régulateur de type PID (Proportionnel Intégral Dérivé). Un tel régulateur PID peut être mis en oeuvre notamment par un circuit électronique physique ou par une fonction logicielle.

L'invention est particulièrement avantageuse dans le cas d'un module de traitement comportant un terme intégral. En effet, dans un procédé conforme à l'invention, le signal d'erreur mobile obtenu grâce à la transformation de l'ensemble des signaux d'erreur actionneurs et d'un modèle cinématique des transmissions mécaniques est toujours ramené à zéro par des déplacements non-antagonistes des actionneurs. Il n'y a donc pas d'effet cumulatif au cours du temps par un module de traitement comportant un terme intégral. Ainsi, lorsqu'une position d'équilibre est atteinte, l'ensemble des actionneurs est à l'arrêt, et aucune contrainte mécanique n'est appliquée.

De plus, avantageusement et selon l'invention, un signal représentatif d'une accélération de consigne du mobile multiplié par un coefficient d'inertie représentatif de l'inertie du mobile est additionné au signal d'effort.

Les inventeurs ont déterminé que, disposant d'un signal d'effort homogène à une force à appliquer au mobile après traitement par le module de traitement, il est alors possible de lui additionner un signal issu de la consigne de position du mobile dérivée deux fois et multipliée par un coefficient représentatif de l'inertie du mobile. On réalise ainsi une boucle de régulation par action anticipative ("feed-forward"). Pour la première fois grâce à un procédé selon l'invention, il est possible d'injecter directement dans la commande un terme de régulation par action anticipative relatif à une accélération de consigne du mobile.

Cette boucle de régulation par l'accélération de consigne du mobile permet d'améliorer les performances de l'automate, en particulier d'obtenir une rapidité et une précision d'exécution accrues.

Avantageusement et selon l'invention, un signal représentatif d'une accélération de consigne de chaque actionneur est additionné au signal de commande dudit actionneur.

Dans un procédé conforme à l'invention, deux boucles de régulation par action anticipative peuvent donc être prévues :

- une première boucle additionne au signal d'effort un terme d'accélération de consigne du mobile multiplié par l'inertie du mobile, juste après le traitement du signal d'erreur mobile par le module de traitement,
- une deuxième boucle additionne des termes d'accélération de consigne des organes d'actionnement multipliés chacun par au moins l'inertie de l'organe d'actionnement correspondant, aux signaux de commande des actionneurs juste après la conversion du signal d'effort en signaux de commande des actionneurs.

Par ailleurs, avantageusement et selon l'invention, la position du mobile est représentée par un vecteur dont la dimension est le nombre de degré de liberté du mobile.

Un référentiel peut être choisi dans lequel la position (ainsi que la vitesse et l'accélération) du mobile sera représentée par un vecteur, par exemple de façon classique un référentiel cartésien. Il peut s'agir d'un vecteur à une dimension (scalaire) dans le cas d'un mobile selon un seul degré de liberté (par exemple une seule direction de translation).

De même, avantageusement et selon l'invention, tous les organes d'actionnement présentent le même nombre de degrés de liberté, l'ensemble des positions des organes d'actionnement est représenté par une matrice dont les dimensions sont le nombre d'actionneurs et le nombre de degrés de liberté des actionneurs.

Cependant, les actionneurs étant généralement des actionneurs à un seul degré de liberté (vérin, moteur tournant, ...), le nombre de degré de liberté des organes d'actionnement d'actionneur est réduit à un.

C'est pourquoi, avantageusement et selon l'invention, chaque organe d'actionnement présentant un unique degré de liberté, l'ensemble des positions des organes d'actionnement est représenté par un vecteur dont la dimension est le nombre d'actionneurs.

La représentation et l'enregistrement des positions du mobile et des organes d'actionnement sous forme vectorielle ou matricielle permettent notamment de mettre en oeuvre un traitement numérique des signaux.

C'est pourquoi, avantageusement et selon l'invention, les données représentatives de la géométrie et de la cinématique des transmissions mécaniques sont représentées et enregistrées sous formes de matrices.

Ainsi, l'élaboration du vecteur des positions de consigne des organes d'actionnement d'actionneur est réalisée par l'application d'une matrice représentative de la géométrie des transmissions mécaniques, au vecteur de position de consigne du mobile.

De même, les signaux d'erreur actionneurs sont représentés et enregistrés sous la forme d'un vecteur contenant les différentes valeurs d'erreurs de position de chaque organe d'actionnement. Ce vecteur, par l'application d'une matrice jacobienne (représentative d'un modèle cinématique de l'automate), est converti en un vecteur d'erreur mobile qui sera traité par le module de traitement.

Inversement, le vecteur d'effort à appliquer au mobile obtenu après traitement du vecteur d'erreur mobile par le module de traitement est converti en un vecteur de commande des actionneurs par la transposée de la matrice jacobienne précédemment utilisée.

Il est à noter que les matrices de géométrie et cinématiques (jacobienne et transposée de la jacobienne) ne sont, par définition, pas carrées dans un automate parallèle redondant, et que leur inversion est donc à réaliser par des règles de pseudo-inversion de matrices.

Plus particulièrement, un procédé selon l'invention peut s'appliquer à au moins deux grands types d'automates à actionnement parallèle redondant dont les actionneurs sont des moteurs tournants.

Dans un premier type les moteurs actionnent chacun une articulation pivotante. Les transmissions mécaniques sont alors généralement des bras articulés parallèles.

Dans un deuxième type, les moteurs actionnent chacun une transmission mécanique souple telle qu'un câble dont ils font varier la longueur au mobile par enroulement-déroulement du câble. Les variations coordonnées des longueurs de câbles entre les différents actionneurs redondants permet de manipuler un mobile dans l'espace, notamment selon six degrés de liberté, et de le maintenir en position par tension des câbles.

L'invention s'étend à un dispositif de commande d'un automate à actionnement parallèle redondant adapté pour mettre en oeuvre un procédé de commande selon l'invention. En particulier, l'invention s'étend à un dispositif de commande d'un automate comprenant :

- un bâti,
- un mobile entraîné par rapport au bâti par une pluralité de transmissions mécaniques en nombre strictement supérieur au nombre de degrés de liberté du mobile, lesdites transmissions mécaniques étant parallèles entre elles et chacune actionnée par au moins un actionneur comprenant :

  • un corps fixé au bâti,
  • au moins un organe d'actionnement d'au moins une transmission mécanique,
  • un capteur de position adapté pour produire un signal, dit signal de position mesurée, représentatif d'une position de l'organe d'actionnement,

  ledit dispositif de commande de l'automate comprenant :

  - au moins une mémoire contenant des données représentatives de la géométrie des transmissions mécaniques,
  - au moins une mémoire contenant des données représentatives de la cinématique des transmissions mécaniques,

- un module comparateur adapté pour pouvoir produire pour chacun des actionneurs un signal, dit signal d'erreur actionneur, par comparaison entre le signal de position mesurée dudit actionneur et un signal de consigne de position dudit actionneur,

caractérisé en ce qu'il comporte en outre :

- un premier module convertisseur adapté pour pouvoir produire un signal, dit signal d'erreur mobile, d'erreur de position du mobile par application de données représentatives de la cinématique des transmissions mécaniques,
- un module de traitement électronique dudit signal d'erreur mobile, adapté pour pouvoir produire un signal d'effort à appliquer au mobile,
- un deuxième module convertisseur adapté pour pouvoir produire des signaux de commande des actionneurs par application de données représentatives de la cinématique des transmissions mécaniques au signal d'effort.

Un dispositif de commande selon l'invention peut comporter plusieurs mémoires ou une unique mémoire dans laquelle l'ensemble des données, et en particulier les données représentatives de la géométrie et de la cinématique des transmissions mécaniques, sont enregistrées.

Un dispositif de commande selon l'invention comprend en outre, avantageusement, un troisième module convertisseur adapté pour pouvoir produire des signaux de consigne de position des organes d'actionnement de chaque actionneur par application de données représentatives de la géométrie des transmissions mécaniques à un signal représentatif d'une position de consigne du mobile.

De plus, avantageusement et selon l'invention, ledit dispositif de commande comprend en outre :

- des données représentatives de l'inertie du mobile enregistrées en mémoire,
- un module de régulation par anticipation adapté pour traiter un signal représentatif d'une position de consigne du mobile et comprenant :

  • deux fonctions de dérivation par rapport au temps en série, de façon à obtenir un signal représentatif d'une accélération de consigne du mobile,
  • une fonction de multiplication du signal représentatif d'une accélération du mobile par les données représentatives de l'inertie du mobile de sorte à obtenir un signal de force à appliquer au mobile,

- un module additionneur additionnant le signal d'effort et le signal de force à appliquer au mobile, pour produire un signal d'effort corrigé.

L'invention est avantageusement simple à mettre en oeuvre sur des automates déjà existants dans le cadre d'une amélioration de ces automates. En effet, il suffit de remplacer un circuit électronique existant par un dispositif selon l'invention, ou simplement d'ajouter le dispositif selon l'invention au circuit de commande de l'automate, voire tout simplement de modifier le logiciel de contrôle de l'automate lorsque celui-ci est entièrement contrôlé par ordinateur.

L'invention s'étend en outre à un automate à actionnement parallèle redondant dont la commande est effectuée selon un procédé de commande conforme à l'invention, et à un automate comprenant un dispositif de commande selon l'invention.

L'invention concerne également un procédé et un dispositif de commande, et un automate caractérisés en combinaison par tout ou partie des caractéristiques mentionnées ci-dessus ou ci-après.

L'invention s'étend à un programme informatique comprenant des instructions de code de programme informatique pour l'exécution des étapes d'un procédé selon l'invention lorsque ledit programme informatique est exécuté sur un système informatique ; ainsi qu'à un produit programme informatique comprenant ce programme informatique ; en particulier à un support d'enregistrement lisible par un système informatique, sur lequel est enregistré un programme informatique comprenant des instructions de code de programme informatique pour l'exécution des étapes d'un procédé selon l'invention lorsque ledit programme informatique est exécuté sur un système informatique.

D'autres buts, caractéristiques et avantages de l'invention apparaîtront à la lecture de la description suivante donnée à titre non limitatif et qui se réfère aux figures annexées dans lesquelles :

- la figure 1 est un schéma d'un premier automate à actionnement parallèle redondant simple parfait,
- la figure 2 est un schéma du premier automate à actionnement parallèle redondant simple présentant des défauts géométriques,
- la figure 3 est un schéma synoptique fonctionnel d'un procédé de commande d'un automate à actionnement parallèle redondant, selon un premier mode de réalisation conforme à l'invention,
- la figure 4 est un schéma synoptique fonctionnel d'un procédé de commande d'un automate à actionnement parallèle redondant, selon un second mode de réalisation conforme à l'invention,

- la figure 5 est un schéma tridimensionnel d'un deuxième automate à actionnement parallèle redondant.

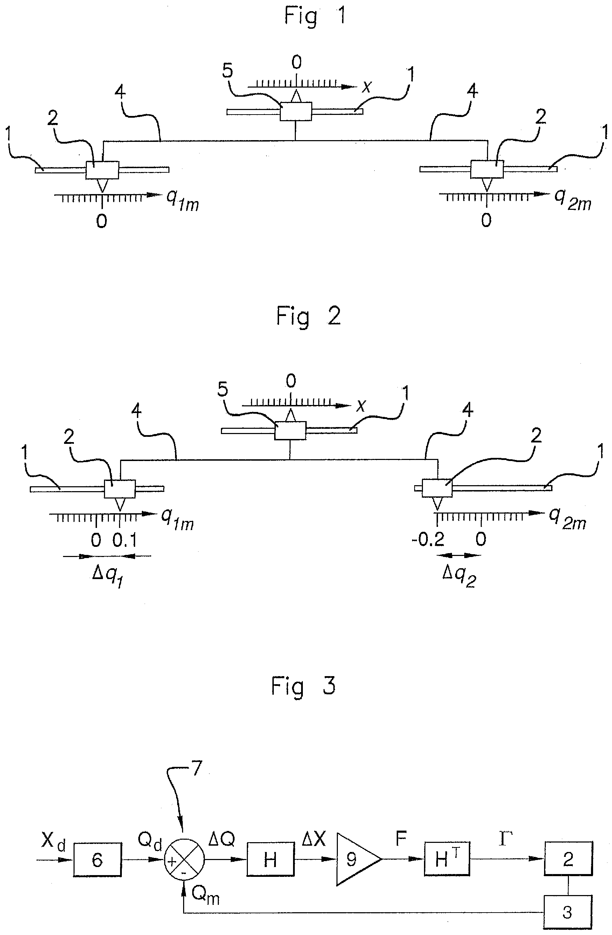

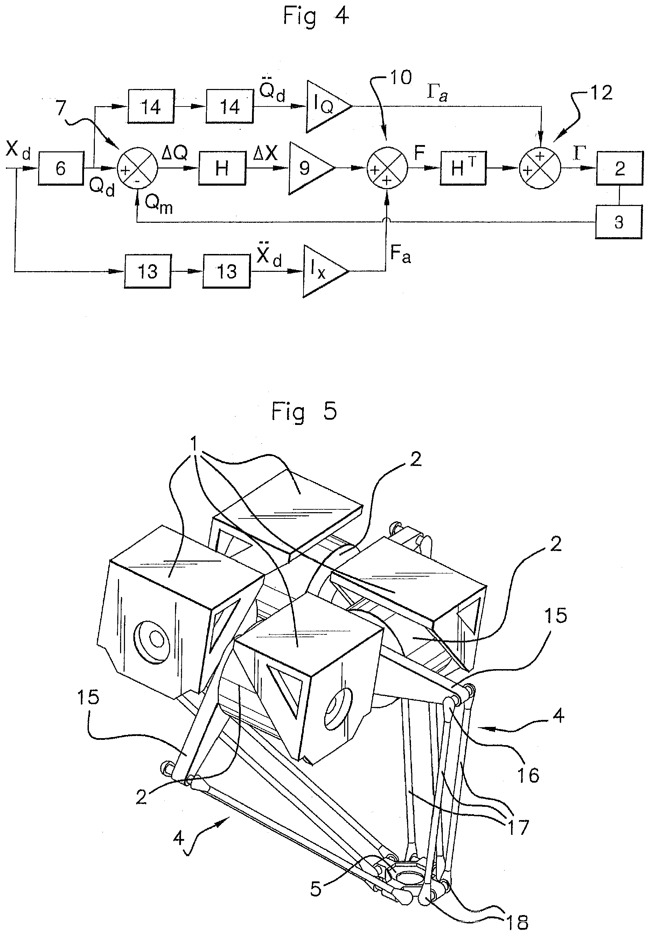

Le procédé selon l'invention (figures 3 et 4) peut être mis en oeuvre par un système informatique de traitement de données numériques, notamment par un logiciel de calcul tel que Matlab®. Ainsi, un dispositif de commande conforme à l'invention peut être un système informatique (comprenant notamment au moins une unité centrale), relié aux capteurs 3 de position des actionneurs 2 pour en recevoir les signaux, et aux actionneurs (ou à des convertisseurs de puissance reliés aux actionneurs) pour les commander, ledit système informatique étant adapté pour mettre en oeuvre un procédé selon l'invention, notamment par programmation logicielle.

Rien n'empêche cependant en variante que ces procédés soient mis en oeuvre grâce à des circuits électroniques physiques adaptés à cet effet.

Ainsi, dans les figures 3 et 4, les valeurs Xd, Qd, Qm, $\Delta$Q, $\Delta$X, F, $\Gamma$, Q̈d, Ẍd, $\Gamma$a, Fa, sont des vecteurs (ou, le cas échéant, des matrices). Ẍd et Q̈d en particulier sont les vecteurs accélération respectivement de l'ensemble des actionneurs, et du mobile ; ils sont obtenus en dérivant deux fois par rapport au temps les vecteurs position du mobile Xd et des actionneurs Qd.

Un signal de consigne Xd de position d'un mobile 5 est converti par un convertisseur à matrice géométrique représentative de la géométrie (et donc de l'effet de chacun des actionneurs sur la position du mobile) des transmissions 4 mécaniques, en des signaux de consignes Qd de position des actionneurs.

En outre, des capteurs 3 mesurent la position des organes d'actionnement des actionneurs 2, et délivrent chacun un signal, dit signal de position mesurée, électronique représentatif de la mesure effectuée. L'ensemble de ces signaux est regroupé dans un vecteur Qm.

Les vecteurs Qd et Qm sont comparés (Qm est soustrait à Qd), afin d'obtenir des signaux d'erreur actionneurs regroupés dans un vecteur $\Delta$Q.

Un automate à actionnement parallèle redondant parfait tel que représenté à la figure 1, comprend deux actionneurs 2 linéaires montés en translation selon une même direction par rapport à un bâti 1, et permettent un mouvement de translation d'un mobile 5 monté sur une glissière solidaire du bâti 1 selon une direction parallèle à la direction de translation des actionneurs 2. Le mobile 5 est relié par une transmission 4 mécanique rigide telle qu'une tige rigide à chacun des deux actionneurs 2. Ainsi, le mobile est mobile selon un seul degré de liberté et est actionné par deux actionneurs - par l'intermédiaire de deux transmissions mécaniques distinctes - parallèles, de sorte qu'il s'agit bien d'un automate à actionnement parallèle redondant.

En outre, des capteurs 3 non représentés mesurent les positions respectives q1m et q2m des actionneurs. En revanche la position x du mobile n'est pas mesurée et est donc inconnue.

L'automate représenté à la figure 1 est parfait. En effet, lorsque chacun des deux actionneurs est en position d'origine (q1m=0 et q2m=0 soit Qm=(0, 0)), le mobile est aussi à sa position d'origine (x=0). Par conséquent l'automate est à l'équilibre ($\Delta$Q=(0, 0)) si la position de consigne Xd est la position d'origine (Xd=0). Les actionneurs ne sont pas en conflit.

Cependant, dans un automate réel, les défauts géométriques sont inévitables. C'est pourquoi, à la figure 2, un automate à actionnement parallèle redondant réel est représenté dans lequel les transmissions mécaniques présentent un défaut de longueur : elles sont respectivement plus courtes de 0,1 et de 0,2 par rapport au modèle parfait de la figure 1. De sorte que, avec un procédé de commande de l'état de la technique, lorsqu'une position de consigne Xd=0 du mobile est donnée, chacun des deux actionneurs reçoit une commande pour rejoindre sa position d'origine (q1m=0 et q2m=0), ce qui est rendu impossible par les défauts géométriques ($\Delta$q1=0 et $\Delta$q2=0).

Toujours selon un procédé de l'état de la technique, et avec un automate imparfait tel que représenté à la figure 2, le signal d'erreur actionneur $\Delta$Q est $\Delta$Q=(-0,1, 0,2) et une position d'équilibre ($\Delta$Q=(0, 0)) est impossible à atteindre. En effet, les signaux de commande produits par le module de traitement sont en contradiction et les actionneurs vont s'opposer activement l'un à l'autre pour rejoindre leur position de consigne (q1m=0 et q2m=0) jusqu'à une éventuelle rupture d'une transmission 4 mécanique ou d'un actionneur 2.

Cet effet est en outre accentué lorsque le module de traitement 9 comporte un terme intégral : par exemple un PID. En effet, l'erreur $\Delta$Q est incrémentée dans le temps à chaque boucle de traitement par le terme intégral du PID.

Dans le procédé selon l'invention tel que représenté à la figure 3, le vecteur représentatif du signal d'erreur actionneur $\Delta$Q dans l'espace de représentation des positions des organes d'actionnement est converti en un vecteur $\Delta$X représentatif d'un signal d'erreur mobile, dans l'espace de représentation des positions du mobile.

Les relations suivantes expriment la conversion de $\Delta$Q en $\Delta$X dans laquelle H est une matrice pseudo-inverse (minimisant la norme euclidienne) de la matrice jacobienne Jm :

$$\dot{Q} = Jm\,\dot{X} \qquad\qquad (1)$$

$$\dot{X} = H\dot{Q} \qquad\qquad (2)$$

où $\dot{X}$ et $Q$ sont les vecteurs vitesse respectivement du mobile 5 et de l'ensemble des actionneurs 2.

La relation (1) dépend de la géométrie des transmissions mécaniques 4 et de leur position, et correspond donc à un modèle cinématique de l'automate.

La validité de ces relations est étendue au cas des petits accroissements $\Delta Q$, $\Delta X$ et $\Delta t$ ($\Delta t$ étant un court intervalle de temps de l'ordre de grandeur du temps de traitement d'une boucle de commande selon l'invention). Ainsi :

$$\Delta Q = Jm \, \Delta X \qquad\qquad (3)$$

$$\Delta X = H \, \Delta Q \qquad\qquad (4)$$

$\Delta X$ est ensuite traité par un module 9 de traitement qui délivre un vecteur F représentatif d'une force ou d'un moment à appliquer au mobile.

Dans un procédé de commande conforme à l'invention, $\Delta X$ est minimisé, et non $\Delta Q$. Or s'il n'existe pas toujours de configuration de l'automate dans lequel $\Delta Q=0$, il existe toujours au moins une configuration telle $\Delta X=0$.

Lorsque $\Delta X=0$, le signal de commande F issu du traitement du vecteur $\Delta X$ par tout module de traitement est F=0. Ainsi, les signaux de commande envoyés aux actionneurs correspondent à des commandes pour que les actionneurs restent immobiles. Ces derniers ne reçoivent donc pas de commandes antagonistes, annulant ainsi tout risque de rupture.

Le signal F en sortie du module 9 de traitement peut être considéré comme représentatif d'une force (ou d'un moment) à appliquer au mobile. Cette force F est convertie en forces $\Gamma$ (ou moments) correspondantes utilisées comme commandes des actionneurs. Ainsi le vecteur F est converti par la transposée $H^T$ de la matrice H de l'espace du mobile à l'espace des actionneurs :

$$\Gamma = H^T \, F \qquad\qquad (5)$$

De sorte que, lorsque F=0, $\Gamma$=0.

Les signaux de commande $\Gamma$ sont utilisés pour la commande des actionneurs 2 et sont avantageusement convertis en puissance d'alimentation des actionneurs.

Ainsi, dans l'exemple d'un automate à défauts géométriques représenté à la figure 2, une position de consigne X=(0) du mobile correspond, par le convertisseur 6 (ou matrice géométrique), à des positions de consigne des actionneurs Qd=(0, 0). Or la mesure effectuée par les capteurs 3 de position des actionneurs lorsque X=(0) est : Qm=(0,1, -0,2). Aucun capteur de position ne mesure la position du mobile 5.

Ainsi, on obtient, grâce au premier comparateur 7, qui soustrait Qm à Qd, le vecteur $\Delta Q$ =(-0,1, 0,2).

Or l'automate représenté à la figure 2 est un automate très simple, de sorte que Jm=(1, 1) et donc que H=(0,5, 0,5).

Ainsi, par la relation (4) on obtient : $\Delta X$=(0,05).

$\Delta X$ n'est donc pas lié à la réalité de la position du mobile : en effet, sur la figure 2, on donne pour consigne X=(0), et alors que le mobile est en position réelle X=(0), l'erreur $\Delta X$ n'est pas nulle. Cela résulte du fait que les capteurs de position ne mesurent que la position des actionneurs 2, et que les défauts géométriques des transmissions mécaniques ne sont au départ pas connus.

Cependant, cette erreur est statique au cours du temps, au moins en ce qui concerne les défauts géométriques de long-terme (tolérances de fabrication par exemple), de sorte que les déplacements relatifs du mobile entre deux positions successives sont exacts. En outre les défauts géométriques considérés, s'ils peuvent conduire à une détérioration de l'automate, sont négligeables en termes de positionnement du mobile.

En fonction du module de traitement 9, un signal F est obtenu pour cette valeur de $\Delta X$=(0,05). Ce signal est converti dans l'espace des actionneurs par la relation (5) dans laquelle $H^T$=(0,5, 0,5)$^T$, de sorte que $\Gamma$=(0,5F, 0,5F).

Les signaux de commande, et donc les efforts développés par les actionneurs sont dans le même sens (même signe) et de même intensité, de sorte que leur mouvement est compatible. Les actionneurs se déplacent vers la droite de la figure 2 jusqu'à ce que : Qm=(0,15, -0,15), où $\Delta Q$=(-0,15, 0,15) et donc d'après la relation (4) avec H=(0,5, 0,5) : $\Delta X$=(0).

Puisque $\Delta X$=(0), F=(0) et $\Gamma$=(0, 0).

Ainsi, bien qu'une erreur statique persiste entre la position de consigne (Qd=(0, 0)) des actionneurs et leur position réelle mesurée (Qm=(0,15, -0,15)), et entre la position de consigne (Xd=(0)) du mobile et sa position réelle (X=(0,05)), l'automate atteint une position d'équilibre dans laquelle les actionneurs ne tentent pas de rejoindre conjointement leur position de consigne. Les risques de rupture de l'automate sont éliminés.

Il est à noter que la position X finale du mobile n'est pas égale à la position Xd de consigne, mais en diffère légèrement (X=(0,05)) afin d'obtenir $\Gamma$ =0.

Obtenir $\Delta X$=(0) et injecter cette valeur dans le module de traitement 9 est particulièrement avantageux lorsque ce dernier comporte un terme intégral. En effet, une erreur minime persistant en entrée d'un régulateur 9 de type PID par exemple, peut rapidement mener à des commandes d'actionneurs fortement antagonistes. L'invention permet donc d'obtenir une position du mobile très proche d'une position de consigne (aux défauts géométriques près), mais permettant d'injecter une valeur nulle dans le module de traitement.

En outre, il est aussi possible, sans mesure de la position du mobile 5, et simplement en mesurant les positions des actionneurs lorsque l'automate s'arrête sur une position, d'obtenir des informations sur les défauts géométriques de l'automate. Ainsi dans l'exemple présenté ci-dessus, on peut déduire de (q2m-qlm)=0,15-(-0,15)=0,3 que l'ensemble des deux tiges de transmission mécanique est globalement plus court de 0,3 que ce qui est attendu. Rien n'empêche d'intégrer cette information au procédé au fur et à mesure afin d'améliorer encore la commande des actionneurs.

Avantageusement, les performances d'un procédé de commande d'un automate selon l'invention, peuvent être améliorées en ajoutant une boucle de régulation par action anticipative dans l'espace du mobile.

Ainsi, comme représenté à la figure 4, la position de consigne Xd du mobile peut être dérivée deux fois par deux dérivateurs 13 en série, de façon à obtenir une accélération de consigne Ẍd du mobile. Cette accélération de consigne est ensuite multipliée par une matrice inertielle Ix représentative de l'inertie du mobile selon chaque degré de liberté du mobile, de façon à obtenir un terme homogène à une force Fa qui est additionné par un comparateur additionneur 10 au vecteur d'effort à appliquer au mobile obtenu en sortie du module de traitement 9, et avant conversion dans l'espace des actionneurs par la matrice H$^T$.

Une telle boucle de régulation par action anticipative dans l'espace du mobile permet d'améliorer encore les performances de l'automate, notamment sa rapidité pour atteindre une position, et donc sa vitesse d'exécution.

De plus, en variante ou en combinaison une boucle de régulation par action anticipative dans l'espace des actionneurs peut aussi être prévue. Les positions de consigne Qd des actionneurs obtenues à partir des positions de consigne Xd du mobile, sont dérivées deux fois par deux dérivateurs 14 en série, de façon à obtenir des accélérations de consigne Q̈d des actionneurs. Ces accélérations de consigne sont ensuite multipliées par une matrice inertielle Iq représentative de l'inertie de chacun des actionneurs, de façon à obtenir un terme homogène à une force $\Gamma$a qui est additionné par un comparateur additionneur 12 au signal obtenu en sortie de la matrice H$^T$, et pour former le signal de commande envoyé aux actionneurs 2.

Cette boucle permet aussi d'améliorer les performances d'un procédé de commande d'un automate selon l'invention.

Le procédé selon l'invention peut être mis en oeuvre par programmation informatique, par exemple à l'aide d'un environnement de développement en temps réel.

Un procédé selon l'invention permet de commander un automate, par exemple tel que représenté à la figure 5.

Dans cet automate, quatre actionneurs 2 sont des moteurs tournant orientés de sorte que leur axe de rotor soit orthogonal à ceux des ses deux voisins. Les stators des quatre actionneurs 2 sont fixés à un bâti 1.

L'automate comporte une platine 5 mobile dans l'espace selon trois degrés de liberté : hauteur, profondeur et largeur ; on peut donc par exemple choisir un repère cartésien pour représenter sa position dans l'espace.

La platine 5 est reliée par quatre bras 4 de transmission mécanique aux quatre actionneurs 2. Les quatre actionneurs agissent donc en parallèle sur le déplacement de la platine 5 selon trois degrés de liberté via les quatre transmissions mécaniques, de sorte qu'il s'agit d'un exemple d'automate à actionnement parallèle redondant.

Les actionneurs forment des articulations pivotantes motrices des bras 4 de transmissions, de sorte qu'on parle parfois d'« espace articulaire » pour désigner l'espace des actionneurs dans lequel l'ensemble des positions des actionneurs est représenté.

Les bras 4 de transmission sont avantageusement formés chacun d'un bras 15 solidaire du rotor d'un actionneur 2 par l'une de ses extrémités et relié par une liaison 16 sphérique par sa seconde extrémité à un avant-bras 17. Chaque avant-bras 17 s'étend d'une liaison 16 sphérique avec un bras 15 à une liaison 18 sphérique avec la platine 5. De sorte que chaque ensemble formé d'un bras 15 et d'un avant-bras 17 forme une transmission de type manivelle-bielle.

Avantageusement les avant-bras 17 sont formés de deux tiges parallèles reliées élastiquement entre elles. Ces tiges présentent avantageusement des extrémités concaves maintenues élastiquement en position sur des rotules respectivement des bras 15 et de la platine 5.

Dans un tel automate, afin de simplifier la modélisation des matrices d'inertie Ix et Iq, l'inertie des bras 15 et d'une moitié des avant-bras 17 est ajoutée à l'inertie du rotor de l'actionneur correspondant, et l'autre moitié de l'inertie des avant-bras 17 est additionnée à l'inertie de la platine 5 mobile.

Un tel automate est généralement utilisé avec un outil monté sur la platine 5, par exemple un outil de préhension permettant de réaliser des opérations de prélèvement, développement et positionnement d'objets.

L'invention peut faire l'objet de nombreuses autres variantes de réalisation non représentées.

En particulier l'invention s'applique à tous types d'automates à actionnement parallèle redondant. Par exemple elle s'applique aussi aux automates dans lesquels un mobile est relié à des actionneurs par des câbles en tension, chaque actionneur étant apte à modifier la longueur de câble le séparant du mobile. Un tel automate peut par exemple présenter huit câbles actionnés chacun par un actionneur et permet de déplacer un mobile selon six degrés de liberté dans l'espace.

Un procédé selon l'invention s'applique aussi en particulier à des automates présentant un nombre d'actionneurs différent des exemples présentés, dès lors que ce nombre d'actionneur est supérieur au nombre de degrés de liberté du mobile.

En outre, rien n'empêche de mettre en oeuvre un procédé selon l'invention grâce à un dispositif physique du type circuit électronique.

De nombreuses fonctions peuvent avantageusement être ajoutées dans un procédé de commande selon l'invention. En effet, d'autres boucles d'anticipation ou de retour peuvent être envisagées, des modules de traitement peuvent être insérés, etc.

En outre, rien n'empêche qu'une (ou plusieurs) transmission(s) mécanique(s) présente(nt) elle(s)-même(s) des actionneurs supplémentaires de façon à former une chaîne de transmission-actionnement redondante en série.

## Revendications

**1.** - Procédé de commande d'un automate comprenant :

- un bâti (1),
- un mobile (5) entraîné par rapport au bâti (1) selon un nombre de degrés de liberté par une pluralité de transmissions (4) mécaniques en nombre strictement supérieur au nombre de degrés de liberté du mobile, lesdites transmissions (4) mécaniques étant parallèles entre elles et chacune actionnée par au moins un actionneur (2) comprenant :

   • un corps fixé au bâti,
   • un organe d'actionnement d'une transmission (4) mécanique,
   • un capteur (3) de position adapté pour produire un signal, dit signal de position mesurée, représentatif d'une position de l'organe d'actionnement, procédé dans lequel, pour chacun des actionneurs (2), un signal, dit signal d'erreur actionneur, est produit par comparaison entre le signal de position mesurée dudit actionneur et un signal de consigne de position dudit actionneur,
   **caractérisé en ce que** :

   - les signaux d'erreur actionneur sont convertis en un signal, dit signal d'erreur mobile, d'erreur de position du mobile par application de données représentatives de la cinématique des transmissions mécaniques,
   - le signal d'erreur mobile est traité par un module de traitement (9) apte à produire un signal d'effort à appliquer au mobile,
   - ledit signal d'effort est converti en signaux de commande des actionneurs (2) par application de données représentatives de la cinématique des transmissions (4) mécaniques.

**2.** - Procédé selon la revendication 1, **caractérisé en ce que** le signal de consigne de position de l'organe d'actionnement de chaque actionneur (2) est obtenu par application de données représentatives de la géométrie des transmissions (4) mécaniques à un signal représentatif d'une position de consigne du mobile (5).

**3.** - Procédé selon l'une des revendications 1 ou 2, **caractérisé en ce que** le module (9) de traitement comprend un régulateur de type PID.

**4.** - Procédé selon l'une des revendications 1 à 3, **caractérisé en ce qu'**un signal représentatif d'une accélération de consigne du mobile (5) multiplié par un coefficient d'inertie représentatif de l'inertie du mobile est additionné au signal d'effort.

**5.** - Procédé selon l'une des revendications 1 à 4, **caractérisé en ce qu'**un signal représentatif d'une accélération de consigne de chaque actionneur (2) est additionné au signal de commande dudit actionneur.

**6.** - Procédé selon l'une des revendications 1 à 5, **caractérisé en ce que** la position du mobile (5) est représentée par un vecteur dont la dimension est le nombre de degré de liberté du mobile.

**7.** - Procédé selon l'une des revendications 1 à 6, **caractérisé en ce que**, tous les organes d'actionnement présentant le même nombre de degrés de liberté, l'ensemble des positions des organes d'actionnement est représenté par une matrice dont les dimensions sont le nombre d'actionneurs (2) et le nombre de degrés de liberté des actionneurs.

**8.** - Procédé selon les revendications 6 et 7, **caractérisé en ce que** les données représentatives de la géométrie et de la cinématique des transmissions (4) mécaniques sont représentées sous formes de matrices.

**9.** - Dispositif de commande d'un automate comprenant :

- un bâti (1),
- un mobile (5) entraîné par rapport au bâti par une pluralité de transmissions (4) mécaniques en nombre strictement supérieur au nombre de degrés de liberté du mobile, lesdites transmissions mécaniques étant parallèles entre elles et chacune actionnée par au moins un actionneur (2) comprenant :

  • un corps fixé au bâti,
  • au moins un organe d'actionnement d'au moins une transmission mécanique,
  • un capteur (3) de position adapté pour produire un signal, dit signal de position mesurée, représentatif d'une position de l'organe d'actionnement,

ledit dispositif de commande de l'automate comprenant :

- au moins une mémoire contenant des données représentatives de la géométrie des transmissions (4) mécaniques,
- au moins une mémoire contenant des données représentatives de la cinématique des transmissions (4) mécaniques,
- un module comparateur (7) adapté pour pouvoir produire pour chacun des actionneurs (2) un signal, dit signal d'erreur actionneur, par comparaison entre le signal de position mesurée dudit actionneur et un signal de consigne de position dudit actionneur,

**caractérisé en ce qu'**il comporte en outre :

- un premier module convertisseur adapté pour pouvoir produire un signal, dit signal d'erreur mobile, d'erreur de position du mobile par application de données représentatives de la cinématique des transmissions mécaniques,
- un module de traitement (9) électronique dudit signal d'erreur mobile, adapté pour pouvoir produire un signal d'effort à appliquer au mobile (5),
- un deuxième module convertisseur adapté pour pouvoir produire des signaux de commande des actionneurs par application de données représentatives de la cinématique des transmissions mécaniques au signal d'effort.

**10.** - Automate à actionnement parallèle redondant commandé par un dispositif selon la revendication 9 mettant en oeuvre un procédé selon l'une des revendications 1 à 8.

**11.** - Programme informatique comprenant des instructions de code de programme informatique pour l'exécution des étapes d'un procédé selon l'une des revendications 1 à 8 lorsque ledit programme informatique est exécuté sur un système informatique.

**12.** - Support d'enregistrement lisible par un système informatique, sur lequel est enregistré un programme informatique comprenant des instructions de code de programme informatique pour l'exécution des étapes d'un procédé selon l'une des revendications 1 à 8 lorsque ledit programme informatique est exécuté sur un système informatique.

**Patentansprüche**

1.  Verfahren zum Steuern eines Automaten, Folgendes umfassend:

    - ein Gestell (1),
    - ein bewegliches Element (5), das im Verhältnis zum Gestell (1) entsprechend einer Anzahl von Freiheitsgraden durch eine Vielzahl von mechanischen Antrieben (4) in strikt größerer Zahl als die Anzahl von Freiheitsgraden des beweglichen Elements angetrieben wird, wobei die besagten mechanischen Antriebe (4) parallel zueinander stehen und jeder durch zumindest einen Steller (2) betätigt wird, Folgendes umfassend:

       • ein am Gestell befestigten Korpus,
       • ein Betätigungsorgan für einen mechanischen Antrieb (4),
       • einen Positionssensor (3), der ausgeführt ist, um ein Signal zu erzeugen, das Positions-Messignal genannt wird, repräsentativ für eine Position des Betätigungsorgans,
       Verfahren, bei dem für jeden der Steller (2) durch Vergleichen des Positions-Messignal des besagten Stellers mit einem Signal für die Sollposition des besagten Stellers ein Signal erzeugt wird, das Stellerfehlersignal genannt wird,
       **dadurch gekennzeichnet, dass**:

          - die Stellerfehlersignale durch das Anwenden repräsentativer Daten für die Kinematik der mechanischen Antriebe in ein Positionsfehlersignal für das bewegliche Element umgewandelt werden, das Fehlersignal des beweglichen Elements genannt wird,
          - das Fehlersignal des beweglichen Elements durch ein Behandlungsmodul (9) behandelt wird, das imstande ist, ein Signal für die Kraft zu erzeugen, die auf das bewegliche Element anzuwenden ist,
          - das besagte Signal für die Kraft durch das Anwenden repräsentativer Daten für die Kinematik der mechanischen Antriebe (2) in Steuersignale für die Steller (4) umgewandelt wird.

2.  Verfahren nach Anspruch 1, **dadurch gekennzeichnet, dass** man das Signal für die Sollposition des Betätigungsorgans eines jeden Stellers (2) durch das Anwenden repräsentativer Daten für die Geometrie der mechanischen Antriebe (4) auf ein repräsentatives Signal für eine Sollposition des beweglichen Elements (5) erhält.

3.  Verfahren nach einem der Ansprüche 1 oder 2, **dadurch gekennzeichnet, dass** das Behandlungsmodul (9) einen Regler des Typs PID umfasst.

4.  Verfahren nach einem der Ansprüche 1 bis 3, **dadurch gekennzeichnet, dass** ein repräsentatives Signal für eine Sollbeschleunigung des beweglichen Elements (5) multipliziert mit einem Trägheitskoeffizienten, der repräsentativ für die Trägheit des beweglichen Elements ist, zum Signal für die Kraft addiert wird.

5.  Verfahren nach einem der Ansprüche 1 bis 4, **dadurch gekennzeichnet, dass** ein repräsentatives Signal für eine Sollbeschleunigung eines jeden Stellers (2) zum Steuersignal für den besagten Steller addiert wird.

6.  Verfahren nach einem der Ansprüche 1 bis 5, **dadurch gekennzeichnet, dass** die Position des beweglichen Elements (5) durch einen Vektor dargestellt wird, dessen Abmessung der Anzahl der Freiheitsgrade des beweglichen Elements entspricht.

7.  Verfahren nach einem der Ansprüche 1 bis 6, **dadurch gekennzeichnet, dass**, wenn sämtliche Betätigungsorgane dieselbe Anzahl an Freiheitsgraden aufweisen, alle Positionen der Betätigungsorgane durch eine Matrix dargestellt werden, deren Abmessungen der Anzahl der Steller (2) und der Anzahl an Freiheitsgraden der Steller entsprechen.

8.  Verfahren nach den Ansprüchen 6 und 7, **dadurch gekennzeichnet, dass** die repräsentativen Daten für die Geometrie und die Kinematik der mechanischen Antriebe (4) in Form von Matrizen dargestellt werden.

9.  Vorrichtung zum Steuern eines Automaten, Folgendes umfassend:

    - ein Gestell (1),
    - ein bewegliches Element (5), das im Verhältnis zum Gestell durch eine Vielzahl von mechanischen Antrieben (4) in strikt größerer Zahl als die Anzahl von Freiheitsgraden des beweglichen Elements angetrieben wird, wobei die besagten mechanischen Antriebe parallel zueinander stehen und jeder durch zumindest einen Steller (2) betätigt wird, Folgendes umfassend:

- ein am Gestell befestigten Korpus,
- zumindest ein Betätigungsorgan für zumindest einen mechanischen Antrieb,
- einen Positionssensor (3), der ausgeführt ist, um ein Signal zu erzeugen, das Positions-Messignal genannt wird, repräsentativ für eine Position des Betätigungsorgans,

wobei die besagte Vorrichtung zum Steuern des Automaten Folgendes umfasst:

- zumindest einen Speicher, der repräsentative Daten für die Geometrie der mechanischen Antriebe (4) umfasst,
- zumindest einen Speicher, der repräsentative Daten für die Kinematik der mechanischen Antriebe (4) umfasst,
- ein Vergleichermodul (7), das ausgeführt ist, um für jeden der Steller (2) durch Vegleichen des Positions-Messignals des besagten Stellers mit einem Signal für die Sollposition des besagten Stellers ein Signal zu erzeugen, das Stellerfehlersignal genannt wird,

**dadurch gekennzeichnet, dass** sie darüber hinaus Folgendes umfasst:

- ein erstes Umwandlungsmodul, das ausgeführt ist, um durch Anwenden repräsentativer Daten für die Kinematik der mechanischen Antriebe ein Signal für einen Positionsfehler des beweglichen Elements erzeugen zu können, das Fehlersignal des beweglichen Elements genannt wird,
- ein elektronisches Behandlungsmodul (9) für das besagte Fehlersignal des beweglichen Elements, das ausgeführt ist, um ein Signal für die Kraft zu erzeugen, die auf das bewegliche Element (5) anzuwenden ist,
- ein zweites Umwandlungsmodul, das ausgeführt ist, um durch das Anwenden repräsentativer Daten für die Kinematik der mechanischen Antriebe auf das Signal für die Kraft Steuersignale für die Steller erzeugen zu können.

10. Automat mit paralleler redundanter Betätigung, der durch eine Vorrichtung nach Anspruch 9 gesteuert wird, die ein Verfahren nach einem der Ansprüche 1 bis 8 anwendet.

11. Computerprogramm, Computerprogramm-Codebefehle zur Ausführung der Schritte eines Verfahrens nach einem der Ansprüche 1 bis 8 umfassend, wenn das besagte Computerprogramm in einem Computersystem ausgeführt wird.

12. Speichermedium, das von einem Computersystem gelesen werden kann, auf dem ein Computerprogramm gespeichert ist, welches Computerprogramm-Codebefehle zur Ausführung der Schritte eines Verfahrens nach einem der Ansprüche 1 bis 8 umfasst, wenn das besagte Computerprogramm in einem Computersystem ausgeführt wird.

**Claims**

1. A method for controlling a machine comprising :

- a frame (1),
- a mobile element (5) driven in relation to said frame (1) along a number of degrees of freedom by a plurality of mechanical transmissions (4), the number of which is strictly greater than the number of degrees of freedom of said mobile element, said mechanical transmissions (4) being in parallel to each other and each being actuated by at least one actuator (2) comprising:

- a body fixed to said frame,
- a member for actuating a mechanical transmission (4),
- a position sensor (3) designed to produce a signal, named measured position signal, representing a position of said actuating member,

according to which method, for each of said actuators (2), a signal, named actuator error signal, is produced by comparing said measured position signal of said actuator with a position setpoint signal of said actuator, **characterised in that**:

- said actuator error signals are converted into a mobile element position error signal, named mobile element error signal, by applying data representing the kinematics of said mechanical transmissions;
- said mobile element error signal is processed by a processing module (9) designed to produce an effort signal to be applied to said mobile element;
- said effort signal is converted into signals for controlling said actuators (2) by applying data representing the kinematics of said mechanical transmissions (4).

2. The method according to claim 1, **characterised in that** said position setpoint signal of said actuating member of each actuator (2) is obtained by applying data representing the geometry of said mechanical transmissions (4) to a signal representing a setpoint position of said mobile element (5).

3. The method according to claim 1 or 2, **characterised in that** said processing module (9) comprises a controller of the PID type.

4. The method according to any one of claims 1 to 3, **characterised in that** a signal representing a setpoint acceleration of said mobile element (5) multiplied by an inertia coefficient representing the inertia of said mobile element is added to said effort signal.

5. The method according to any one of claims 1 to 4, **characterised in that** a signal representing a setpoint acceleration of each actuator (2) is added to the signal for controlling said actuator.

6. The method according to any one of claims 1 to 5, **characterised in that** the position of said mobile element (5) is represented by a vector, the dimension of which is the number of degrees of freedom of said mobile element.

7. The method according to any one of claims 1 to 6, **characterised in that** with all of said actuating members having the same number of degrees of freedom, all of the positions of said actuating members are represented by a matrix, the dimensions of which are the number of actuators (2) and the number of degrees of freedom of said actuators.

8. The method according to claims 6 and 7, **characterised in that** the data representing the geometry and the kinematics of said mechanical transmissions (4) is represented in the form of matrices.

9. A device for controlling a machine comprising:

- a frame (1),
- a mobile element (5) driven in relation to said frame by a plurality of mechanical transmissions (4), the number of which is strictly greater than the number of degrees of freedom of said mobile element, said mechanical transmissions being in parallel to each other and each being actuated by at least one actuator (2) comprising:

  • a body fixed to said frame,
  • at least one member for actuating at least one mechanical transmission,
  • a position sensor (3) designed to produce a signal, named measured position signal, representing a position of said actuating member,

said device for controlling said machine comprising:

- at least one memory containing data representing the geometry of said mechanical transmissions (4);
- at least one memory containing data representing the kinematics of said mechanical transmissions (4);
- a comparator module (7) designed to be able to produce a signal, named actuator error signal, for each of said actuators (2) by comparing the measured position signal of said actuator with a position setpoint signal of said actuator,

**characterised in that** it further comprises:

- a first converter module designed to be able to produce a mobile element position error signal, named mobile element error signal, by applying data representing the kinematics of said mechanical transmissions;
- a module (9) for electronically processing said mobile element error signal designed to be able to produce an effort signal to be applied to said mobile element (5);
- a second converter module designed to be able to produce signals for controlling said actuators by applying data representing the kinematics of said mechanical transmissions to said effort signal.

10. A machine with redundant parallel actuation controlled by a device of claim 9, implementing a method of any one of claims 1 to 8.

11. A computer program comprising computer program instruction codes for executing the steps of a method of any one of claims 1 to 8 when said computer program is executed on a computer system.

12. A recording medium that can be read by a computer system, which recording medium stores a computer program comprising computer program instruction codes for executing the steps of a method of any one of claims 1 to 8 when said computer program is executed on a computer system.

## Fig 1

## Fig 2

## Fig 3

## Fig 4

## Fig 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CORBEL et al.** Towards 100g with PKM. Is actuation redundancy a good solution for pick and place. *Proceedings of the IEEE International Conference on Robotics and Automation,* 2010, 4675-4682